# EUROPÄISCHE PATENTANMELDUNG

(11) **EP 1 944 928 A2**
(43) Veröffentlichungstag der Anmeldung: **16.07.2008**
(21) Anmeldenummer: 08000217.3
(22) Anmeldetag: 08.01.2008
(51) Int. Cl.: H04L 12/58

(54) **Verfahren und System zum gesicherten Austausch einer E-Mail Nachricht**

(30) Priorität: 12.01.2007 DE 102007001883
(71) Anmelder: Utimaco Safeware AG, 61440 Oberursel (DE)
(72) Erfinder: Horn, Jörg, 40667 Meerbusch (DE)
(74) Vertreter: Bauer, Dirk

(57) **Zusammenfassung**

Offenbart ist einerseits ein Verfahren zum gesicherten Austausch einer E-Mail Nachricht (1), wobei die E-Mail Nachricht (1) zunächst kodiert und anschließend zu einem Empfänger (3) übertragen wird, und andererseits ein System (5) zum gesicherten Austauschen einer E-Mail Nachricht (1), wobei die E-Mail Nachricht (1) zunächst mittels einer Kodierungskomponente des Systems (5) kodierbar und anschließend mittels des Systems (5) versendbar ist.

Um den gesicherten Austausch einer E-Mail Nachricht (1) ohne vorherige Abstimmung zwischen Versender (2) und Empfänger (3) über die Technik zu ermöglichen wird vorgeschlagen, dass im Rahmen eines erfindungsgemäßen Verfahrens die E-Mail Nachricht (1) in ein kodiertes Dokument (7) umgewandelt und das Dokument (7) als E-Mailanhang (8) zu dem Empfänger (3) übertragen wird, respektive im Rahmen eines erfindungsgemäßen Systems (5) die E-Mail Nachricht (1) mittels der Kodierungskomponente in ein kodiertes Dokument (7) umwandelbar und dieses mittels des Systems (5) als E-Mailanhang (8) versendbar ist.

## Beschreibung

Die vorliegende Erfindung betrifft ein Verfahren zum gesicherten Austausch einer E-Mail Nachricht, wobei die E-Mail Nachricht zunächst kodiert und anschließend zu einem Empfänger übertragen wird, sowie ein System zum gesicherten Austauschen einer E-Mail Nachricht, wobei die E-Mail Nachricht zunächst mittels einer Kodierungskomponente des Systems kodierbar und anschließend mittels des Systems versendbar ist.

Derartige Verfahren und Systeme werden insbesondere in allgemein bekannten Servern und Server-Applikationen (so genannten "Mailservern" oder auch "Mail-Gateways") realisiert. Mittels solcher Mailserver werden E-Mail Nachrichten - Nachrichten im "Internet Message Format" (auch "E-Mails" oder "eMails") gemäß RFC 2822 der IETF (www.ietf.org) - für eine größere Zahl von Nutzern beispielsweise in einem Firmennetzwerk verwaltet, empfangen, versendet, gespeichert oder weitergeleitet.

Die bekannten Mailserver weisen hierzu - beispielsweise in Form so genannter Dienste - verschiedene Komponenten auf: Eine Versandkomponente übernimmt (als "MTA", "Mail Transfer Agent") E-Mail Nachrichten von einem E-Mail Programm eines Versenders (in dem Firmennetzwerk), eine Kodierungskomponente kodiert die E-Mail Nachricht vor der Weiterleitung an einen Empfänger, eine Empfangskomponente speichert (insbesondere von außerhalb) eingehende E-Mail Nachrichten (als "MDA", "Mail Delivery Agent") in die verschiedenen E-Mail Postfächer der Nutzer des Firmennetzwerks und ermöglicht (als "MRA", "Mail Retrieval Agent") das Laden der gespeicherten E-Mail Nachrichten in die E-Mail Programme der Nutzer.

Unter "Kodierung" einer E-Mail Nachricht werden im Rahmen dieser Schrift ebenso kryptografisches Verschlüsseln wie Signieren von E-Mail Nachrichten, Kombinationen von Verschlüsseln und Signieren, oder das Versehen einer E-Mail Nachricht mit dokumentenspezifischen Rechten anderer Form verstanden.

Beim Signieren werden die zu kodierenden Daten gehasht, der Hash kryptografisch signiert und das Ergebnis in das dem kryptografischen Protokoll zugrunde liegende Format überführt. Für S/MIME sind verschiedene Möglichkeiten des Signierens bekannt, wobei entweder die Daten lesbar bleiben und die Signatur einen separaten Block bildet ("clearsigning") oder die Daten zusammen mit der Signatur in einen Block geschrieben werden ("opaque signing").

Beim kryptografischen Verschlüsseln werden die Daten selbst - nicht ein Hash dieser Daten - mit einem kryptografischen Schlüssel verschlüsselt. Verschlüsselte Formate sind also immer "opaque" da hier ja der eigentliche Inhalt, nicht dessen Authentizität geschützt werden soll.

Zum symmetrischen Verschlüsseln kann beispielsweise aus einem Passwort ein Schlüssel abgeleitet werden (passwortbasierte Verschlüsselung). Bei asymmetrischer Verschlüsselung kann ein zufällig generierter symmetrischer Schlüssel zur Verschlüsselung verwendet werden. Dieser symmetrische Schlüssel wird dann mit dem asymmetrischen Schlüssel verschlüsselt und zusammen mit den verschlüsselten Daten in das dem kryptografischen Protokoll zugrunde liegende Format überführt.

Die bekannten Kodierungskomponenten basieren zumeist auf der Nutzung von personalisierten kryptografischen Schlüsseln durch die jeweilige Person und/oder zentrale Vorrichtungen. Verbreitet sind insbesondere asymmetrische Kodierungsverfahren mit je einem öffentlichen und einem privaten Schlüssel, deren Gültigkeit über eine zentrale Zertifizierungsstelle ("CA", "Certificate Authority") gesichert wird. Des Weiteren kommen auch proprietäre Lösungen zum Einsatz, die aus E-Mail Nachrichten individuell verschlüsselte bzw. digital signierte Container generieren und an den Empfänger ausliefern. Bei einem Kommunikationspartner muss dann eine datentechnische Umgebung zur Verfügung stehen, die Entschlüsselung bzw. Verifikation der E-Mail Nachrichten bzw. Container ermöglicht. WO 98/49643 schlägt in diesem Sinne vor, dass beim Absender einer E-Mail Nachricht ein Programm vorgesehen ist, welches ebenfalls der Empfänger haben muss, um die mit dem Programm kodierte E-Mail Nachricht zu entschlüsseln.

Gleichwohl insbesondere asymmetrische Kodierungsverfahren, beispielsweise nach S-MIME oder OpenPGP im Wesentlichen von allen handelsüblichen E-Mail Programmen unterstützt und darüber hinaus zunehmend für die elektronische Kommunikation mit öffentlichen Stellen gefordert werden, haben sie bisher weder im gewerblichen, noch im privaten Bereich eine nennenswerte Verbreitung erfahren. Denn ihre Nutzung setzt einerseits voraus, dass sowohl Versender als auch Empfänger einer entsprechend kodierten E-Mail Nachricht die Nutzung des jeweiligen Verfahrens explizit aktivieren. Andererseits ist - insbesondere in gesicherten Firmennetzwerken - die notwendige Abfrage der entsprechenden externen Zertifizierungsstellen häufig nur eingeschränkt möglich.

Die bekannten Verfahren und Systeme zum gesicherten Austausch einer E-Mail Nachricht sind aufgrund der eingeschränkten Verbreitung dieser Kodierungsverfahren entweder auf einen eingeschränkten Nutzerkreis beschränkt oder eröffnen - im Sinne einer eigentlich unerwünschten Rückfallposition - die Möglichkeit einer ungesicherten Kommunikation.

Im weiteren Umfeld der Erfindung sind Verfahren bekannt, verschiedene Arten von Dokumenten im Format PDF zu versenden. Beispielsweise offenbart DE 10 2004 052 934 A1 den automatischen Versand von Untersuchungsdaten aus einem medizintechnischen Gerät in einer signierten PDF-Datei. US 2002/0178353 A1 offenbart das automatische Generieren von PDF-Rechnungen aus einer Datenbank und US 2003/0055952 A1 die automatische Darstellung von Überwachungsinformationen in PDF-Dokumenten sowie jeweils deren automatischen Versand als E-Mailanhang.

### Aufgabe

Aufgabe der vorliegenden Erfindung ist es, den gesicherten Austausch einer E-Mail Nachricht ohne vorherige Abstimmung zwischen Versender und Empfänger über die Technik zu ermöglichen.

### Lösung

Ausgehend von den bekannten Verfahren wird erfindungsgemäß vorgeschlagen, dass die E-Mail Nachricht in ein kodiertes Dokument umgewandelt und das Dokument als E-Mailanhang zu dem Empfänger übertragen wird. Die Übermittlung eines E-Mailanhangs - nahezu gleich welchen Formats - erfordert in aller Regel keine vorherige Abstimmung zwischen Versender und Empfänger. Die technischen Voraussetzungen für den zunächst rein technischen Austausch der E-Mail Nachricht sind damit gegenüber den bekannten Verfahren signifikant reduziert.

Das Vorgehen zum Entschlüsseln des als E-Mailanhang übermittelten Dokuments kann unabhängig von Verfahren und Vorgang des Austauschs der E-Mail Nachricht abgestimmt werden. Beispielsweise kann der Versender dem Empfänger ein für die Kodierung verwendetes Passwort vor oder nach dem Austausch der E-Mail Nachricht telefonisch oder durch Telefax mitteilen.

Erfindungsgemäß wird die zum Austausch vorgesehene E-Mail Nachricht in ein Dokument mit Entschlüsselungsfunktion umgewandelt. Für einen Nicht-Berechtigten ist dann beim Nachrichtenaustausch ein Direktzugriff problematisch, da er keine Möglichkeit hat, auf den Informationsgehalt der E-Mail Nachricht direkt zuzugreifen.

Vorzugsweise wird im Rahmen eines erfindungsgemäßen Verfahrens die E-Mail Nachricht in ein Dokument im PDF-Format oder im Microsoft Office Format umgewandelt. Das PDF-Format ist ein zwar proprietäres, aber zur Verwendung zumindest in seinen Grundfunktionen - hier insbesondere bezüglich Kodierung - offenes Format, für das zudem auf praktisch jeder Hardware- und Systemplattform einschließlich mobiler PDA ein Reader zur Verfügung steht, der diese Grundfunktionen zur Verfügung stellt. Bei Umwandlung der E-Mail Nachricht in ein PDF-Dokument muss daher mit praktisch jedem beliebigen Empfänger lediglich die Form der Entschlüsselung des Dokuments, beispielsweise durch Mitteilung des verwendeten Passworts, abgestimmt werden.

Das Microsoft Office Format weist als Quasi-Industriestandard wie das PDF-Format eine gleichfalls hohe Verbreitung auf und bietet ebenso eine (wenn auch vergleichsweise rudimentäre) Kodierungsfunktion. Gegenüber der Verwendung von PDF ist das Microsoft Office Format aber einerseits kaum dokumentiert und wurde andererseits in der Vergangenheit vermehrt missbraucht, um Malware - insbesondere Viren - in Form von Skripten einzubinden. E-Mailanhänge in Microsoft Office Formaten an E-Mail Nachrichten von externen Versendern werden daher häufig gerade in Firmennetzwerken nicht geduldet.

Erfindungsgemäß werden an Stelle nur selten verbreiteter bzw. kompliziert zu verarbeitender kryptografischer Infrastrukturen oder proprietärer Komponenten, die zudem auch noch alle gängigen Standards unterstützen müssten, lediglich Standardformate verwendet, deren Anzeigesoftware diese Funktionalität zur Entschlüsselung bzw. Verifizierung bereits mitbringt. Auf diese Weise wird sichergestellt, dass einem Empfänger, welcher das Dokument lesen kann, auch die benötigte Entschlüsselungs- bzw. Verifizierungskomponente zur Verfügung steht.

Wird das umgewandelte Dokument als E-Mailanhang übermittelt, so ist es möglich, mehrere Anhänge der ursprünglichen Nachricht in einen E-Mailanhang überzuführen.

In einer vorteilhaften Ausgestaltung eines erfindungsgemäßen Verfahrens wird zum Beantworten der E-Mail Nachricht ein ausführbarer Programmcode in das Dokument integriert. Insbesondere die oben erwähnten Dokumentformate bieten die Möglichkeit, derartigen Programmcode - in Form von Binärcode oder als ausführbares Skript - in das Dokument einzubinden. Ermöglicht ein solcher Programmcode eine kodierte Beantwortung der E-Mail Nachricht, so ist ohne zusätzliche Infrastruktur auf Seiten des Empfängers eine gesicherte Kommunikation mit dem Versender der E-Mail Nachricht sichergestellt.

Weiterhin kann im Rahmen eines erfindungsgemäßen Verfahrens eine Meta-Information in das Dokument integriert werden. Beispielsweise können Angaben sowohl über den Versender der E-Mail Nachricht, als auch über den Zeitpunkt des Versendens zu Dokumentationszwecken in einen (mit dem Reader) nur über Zusatzfunktionen sichtbaren Dateikopf (auch "Header") in das Dokument eingebunden werden.

Zum Beispiel kann vorteilhafter Weise eine Identifikationsnummer in das Dokument integriert werden, die die E-Mail Nachricht eindeutig identifiziert. Eine solche Identifikationsnummer kann beispielsweise mit einem durch ein E-Mail Programm des Versenders (gemäß RFC 2822) generierten "Message Identifier" der E-Mail Nachricht übereinstimmen. Eine solche eindeutige Identifikationsnummer ermöglicht auf besonders einfache Weise beim Beantworten eine eindeutige Bezugnahme auf die empfangene E-Mail Nachricht.

In einer besonders bevorzugten Ausgestaltung wird im Rahmen eines erfindungsgemäßen Verfahrens das Dokument mit einem Passwort kodiert. Kodierung mit einem Passwort ist - zumal im Kontext der oben aufgeführten Dokumentformate - einerseits technisch besonders einfach zu realisieren und erleichtert andererseits die notwendige Abstimmung zwischen Versender und Empfänger.

Im Rahmen eines solchen erfindungsgemäßen Verfahrens kann insbesondere zum Beantworten der E-Mail Nachricht das Passwort in das Dokument integriert werden. Wird beispielsweise das Passwort im Rahmen eines ausführbaren Programmcodes für das Beantworten der E-Mail Nachricht integriert, so muss der Empfänger der E-Mail Nachricht dieses Passwort zum Beantworten derselben nicht erneut eingeben. Das Beantworten der E-Mail Nachricht ist so deutlich vereinfacht.

Mit einem nach einem erfindungsgemäßen Verfahren erstellten Dokument kann darüber hinaus vorteilhafter Weise zum Beantworten der E-Mail Nachricht ein Zertifikat übermittelt werden. Beispielsweise kann ein öffentlicher Schlüssel des Versenders in das Dokument integriert oder als weiterer Nachrichtenanhang an den Empfänger übermittelt werden.

Enthält das Dokument einen (je nach Reader produktspezifisch nicht sichtbaren) Meta-Informationsbereich, so kann über diesen Bereich beispielsweise im Falle einer asymmetrischen Kodierung das öffentliche Zertifikat des ursprünglichen Absenders in dem Dokument enthalten sein und somit für die Kodierung einer Antwort auf die E-Mail Nachricht verwendet werden.

Weist das Dokument eine eindeutige Identifizierungsnummer auf, so kann über diese ID-Nummer beispielsweise vorab festgelegt werden, welcher Empfänger die Nachricht erhalten darf.

Im Rahmen eines erfindungsgemäßen Verfahrens wird darüber hinaus vorzugsweise ein Verweis auf eine zum Beantworten der E-Mail Nachricht eingerichtete Webseite mit dem Dokument übermittelt. Insbesondere im Kontext von Firmennetzwerken, zunehmend aber auch im privaten Bereich stehen den Versendern von E-Mail Nachrichten im Internet öffentlich zugängliche Webseiten zur freien Gestaltung zur Verfügung. Eine solche Webseite kann - insbesondere dynamisch, abhängig von einer Identifikationsnummer einer E-Mail Nachricht - zum Beantworten einer E-Mail Nachricht eingerichtet werden. Wird ein Verweis (auch "Link") auf eine solche Webseite in das Dokument integriert oder mit dem E-Mailanhang in Textform an den Empfänger der E-Mail Nachricht übermittelt, so muss der Empfänger der E-Mail Nachricht zum Beantworten derselben nicht im Reader die Ausführung von ausführbarem Code gestatten. Das gesicherte Beantworten der E-Mail Nachricht ist so auch mit höheren Sicherheitsanforderungen vereinbar.

Wird in dem Dokument ein Link eingebettet, der den Empfänger des Dokuments für dessen Beantwortung auf eine zur Infrastruktur des Versenders gehörende Webseite verweist, so ist nachvollziehbar, welcher Server zu konnektieren ist, welche Person die

E-Mail beantwortet hat, welche ursprüngliche E-Mail Nachricht beantwortet wird und mit welchem Passwort bzw. Zertifikat das Dokument kodiert war. Die gesicherte Webseite transferiert dann die E-Mail Nachricht beispielsweise in Form eines E-Mailanhangs gesichert an den eigentlichen Empfänger, ohne eine zwischengeschaltete Instanz, welche dann die eigentliche Zustellung übernimmt.

Zur Sicherung der Übertragung kann das Dokument kodiert transferiert werden. Bei symmetrischer Kodierung kann das Passwort kodiert mit dem Dokument übermittelt und somit für die symmetrische Kodierung einer sicheren Antwort durch eine dokumenteninterne Skriptimplementierung verwendet werden.

Alternativ oder zusätzlich kann bei symmetrischer Kodierung das Zertifikat des Senders im Dokument übermittelt werden. Die Antwort kann dann asymmetrisch oder symmetrisch erfolgen, falls das Standardformat eine asymmetrische Kodierung unterstützt. Bei symmetrischer Kodierung ist eine separate Infrastruktur beim Empfänger nicht erforderlich.

Ausgehend von den bekannten Systemen wird erfindungsgemäß vorgeschlagen, dass die E-Mail Nachricht mittels der Kodierungskomponente in ein kodiertes Dokument umwandelbar und dieses mittels des Systems als E-Mailanhang versendbar ist. Ein solches erfindungsgemäßes System gestattet die Ausführung eines der vorstehend erläuterten erfindungsgemäßen Verfahren.

Vorteilhafter Weise weist ein erfindungsgemäßes System ein Adressverzeichnis auf, mittels dessen die Kodierungskomponente versender- und/oder empfängerspezifisch konfigurierbar ist, um die gesamte Infrastruktur sicherer zu gestalten. Eine Konfigurationskomponente des erfindungsgemäßen Systems greift dann beispielsweise auf das Adressverzeichnis zurück, um ein für die Kommunikation mit einem Empfänger einer E-Mail Nachricht bereits vereinbartes Passwort der Kodierungskomponente erneut zur Verfügung zu stellen.

Anhand eines solchen Adressverzeichnisses kann eine im Unternehmen des Versenders allgemein vereinbarte Policy definiert sein, die ein Kodierungsverfahren beispielsweise individuell für einzelne Empfängeradressen oder auch für Empfängeradressen einer spezifizierten Domain bestimmt. Alternativ kann die Kodierung auch durch den Versender mittels Steuersequenzen im Betreff ("Subject") oder - bei automatisch versendeten E-Mail Nachrichten - in einem X-Header der E-Mail Nachricht definiert werden.

### Ausführungsbeispiel

Die Erfindung wird nachfolgend anhand eines Ausführungsbeispiels erläutert. Die Zeichnungsfigur veranschaulicht den erfindungsgemäß gesicherten Austausch einer E-Mail Nachricht 1 zwischen einem Versender 2 in einem nicht weiter dargestellten Firmennetzwerk und einem Empfänger 3 außerhalb dieses Firmennetzwerks.

Der Versender 2 schreibt in einem handelsüblichen E-Mailclient auf seinem Arbeitsplatzrechner 4 eine E-Mail Nachricht 1, fügt zu Beginn der Betreffzeile dieser E-Mail Nachricht 1 den Vermerk {crypt_pdf 4711}" ein und versendet die E-Mail Nachricht 1 an den Empfänger 3.

In dem Firmennetzwerk werden ein- und ausgehende E-Mail Nachrichten über ein erfindungsgemäßes System 5 als "Mailserver" verwaltet. Eine nicht weiter dargestellte Verarbeitungskomponente des Systems 5 interpretiert den Vermerk in der Betreffzeile anhand der "{}" als Steuersequenz und anhand des Schlüsselworts "crypt_pdf" als Anweisung des Versenders 2, die E-Mail Nachricht 1 mit der Zeichenfolge "4711 als Schlüssel 6 zu kodieren.

Die Verarbeitungskomponente extrahiert zunächst aus dem "Body" der E-Mail Nachricht 1 deren Textinhalt und schreibt diesen in ein Dokument 7 im PDF-Format. Ein der E-Mail Nachricht 1 angehängtes S-MIME Zertifikat des Versenders 2 und eine gleichfalls der E-Mail Nachricht 1 angehängte CAD-Zeichnung fügt die Verarbeitungskomponente dem Dokument 7 als Anhang bei. Außerdem fügt die Verarbeitungskomponente dem Dokument 7 vor dem eigentlichen Textinhalt eine firmenspezifische Begrüßungsseite und hinter dem Textinhalt eine spezielle Antwortseite bei. Anschließend kodiert die Verarbeitungskomponente das Dokument 7 mit dem Schlüssel 6 und hängt es als E-Mailanhang 8 einer zweiten - unkodierten - E-Mail Nachricht 9 an.

Die zweite E-Mail Nachricht 9 versieht die Verarbeitungskomponente mit den gleichfalls aus der ersten E-Mail Nachricht 1 extrahierten Adressen von Versender 2 und Empfänger 3, fügt in deren "Body" einen Standardvermerk ein, wonach der Anhang eine automatisch kodierte Nachricht des Versenders 2 enthalte und versendet die zweite E-Mail Nachricht 9 über das Internet an den externen Empfänger 3. Außerdem veranlasst die Verarbeitungskomponente über eine Validierungs- und Konfigurationskomponente des Systems 5, dass der Schlüssel 6 für den Empfänger 3 in einem Adressverzeichnis 10 für eine mögliche spätere Verwendung gespeichert wird.

In der Zwischenzeit hat der Versender 2 über sein Mobiltelefon 11 dem Empfänger 3 telefonisch die E-Mail Nachricht 1 angekündigt und ihm den Schlüssel 6 mitgeteilt. Der Empfänger 3 empfängt die zweite E-Mail Nachricht 9 in einem E-Mailclient seines PDA 12, bestätigt das Öffnen des E-Mailanhangs 8 in dem PDF-Reader seines PDA 12, gibt über dessen Tastatur auf die entsprechende Aufforderung des PDF-Readers den Schlüssel 6 ein und liest die E-Mail Nachricht 1 in dem entschlüsselten Dokument 7.

Zum Beantworten der E-Mail Nachricht 1 wählt der Empfänger 3 den hierzu in der angehängten Seite des Dokuments 7 angegebenen Verweis auf eine spezielle, für diese E-Mail Nachricht 1 personalisierte Webseite auf dem erfindungsgemäßen System 5 und schreibt in der Webmail-Oberfläche dieser Webseite eine Antwort an den Versender 2 der E-Mail Nachricht 1.

Die Webseite versendet zunächst die Antwort im Firmennetzwerk unmittelbar als weitere (nicht dargestellte) E-Mail Nachricht an den Versender 2. Um die Antwort außerdem für dem Empfänger 3 zu dokumentieren, übergibt die Webseite diese außerdem an die Verarbeitungskomponente, die aus dem Adressverzeichnis 10 für den Empfänger 3 den Schlüssel 6 anfordert, die Antwort wie oben beschrieben in ein weiteres kodiertes Dokument 7 umwandelt und dieses wiederum als E-Mailanhang 8 an den Empfänger 3 überträgt.

Entsprechend können verschiedene Übermittlungswege zum gesicherten Austausch von E-Mail Nachrichten dargestellt werden.

Wird eine E-Mail Nachricht 1 vom Versender 2 zu der Verarbeitungskomponente geleitet, stellt diese auf Basis der Konfigurationskomponente fest, ob die E-Mail Nachricht 1 verarbeitet werden soll oder nicht. Die Konfigurationskomponente zieht hierzu ein Adressverzeichnis hinzu, um einen Absender/Empfänger zu verifizieren. Anschließend wird eine Entscheidung getroffen, wie mit der E-Mail Nachricht 1 zu verfahren ist: Wenn die E-Mail Nachricht 1 versendet werden soll, wird die E-Mail Nachricht 1 in ein Dokument 7 überführt, das eine Möglichkeit vorsieht, sicher auf die E-Mail Nachricht 1 zu antworten. Die Antwort kann durch eine dokumenteninterne Skriptimplementierung oder aber durch einen dokumentenspezifischen, die E-Mail Nachricht 1 identifizierenden Link auf eine sichere Webseite erfolgen. Falls die E-Mail Nachricht 1 Anhänge enthält, werden diese als Anhänge in das erzeugte Dokument 7 aufgenommen oder separat in ein entsprechendes Dokumentenformat überführt. Wenn die Anhänge der E-Mail Nachricht 1 bereits in einem Standardformat vorliegen, kann dieser Schritt entfallen und für diese Anhänge direkt zur Kodierung übergegangen werden. Die zu versendenden Dokumente werden dann kodiert (verschlüsselt, signiert, verschlüsselt und signiert, oder mit einer anderen Form von dokumentenspezifischen Rechten versehen) und als E-Mailanhang 8 dem Empfänger 3 übergeben.

Bei Empfang einer E-Mail Nachricht eines externen Kommunikationspartners stellt die Verarbeitungskomponente fest, ob dies eine reguläre E-Mail Nachricht ist, oder eine E-Mail Nachricht, die eine sichere Antwort auf eine zuvor von einer Verarbeitungskomponente verarbeitete E-Mail Nachricht 1 darstellt. Ist die eingehende E-Mail Nachricht eine sichere Antwort auf ein zuvor aus einer E-Mail Nachricht 1 erzeugtes Dokument 7, so überführt die Verarbeitungskomponente sie in eine normale E-Mail Nachricht, die nach den gängigen Sicherungsmethoden für E-Mail Nachrichten weiter verarbeitet wird. Der eingehenden E-Mail Nachricht anhängende weitere Dokumente können mit einer anderen Form von dokumentenspezifischen Rechten versehen werden.

Eine sichere Antwort kann durch Aufruf einer sicheren Internetseite über einen durch das Dokument 7 zur Verfügung gestellten Link erfolgen. Alternativ erfolgt die Antwort aus dem Dokument 7 direkt, wofür das Dokument 7 die notwendigen Mechanismen zur Verfügung stellt. Die Antwort wird entweder unmittelbar aus dem Dokument 7 kodiert (verschlüsselt, signiert, verschlüsselt und signiert, oder mit einer anderen Form von dokumentenspezifischen Rechten versehen) an den Empfänger 3 gesendet oder aber es wird ein kodiertes Dokument 7 generiert, welches als E-Mailanhang 8 verschickt wird. Durch einen seitens des Dokumentes 7 zur Verfügung gestellten Link wird der Empfänger 3 auf eine sichere Internetseite geleitet, auf der er (bei Bedarf nach einer Authentifizierung) direkt eine Antwort verfassen kann. Hierbei bleibt der Kontext der E-Mail Nachricht 1 erhalten (Nachrichtenhistorie).

Generell wird die zum Versenden vorgesehene E-Mail Nachricht 1 in ein Dokument 7 umgewandelt, das ein Standardformat mit Entschlüsselungsfunktion aufweist. Das kodierte Dokument 7 kann in Form eines zusammengesetzten Dokuments erstellt werden, beispielsweise enthält das Dokument 7 selbst den eigentlichen Text der E-Mail Nachricht 1 und ein Dokumentenanhang enthält alle Anhänge der E-Mail Nachricht 1. Im Ergebnis wird ein einziges kodiertes Dokument 7 als E-Mailanhang einer zweiten E-Mail Nachricht 9 versendet.

### In den Figuren sind

- 1: E-Mail Nachricht
- 2: Versender
- 3: Empfänger
- 4: Arbeitsplatzrechner
- 5: System
- 6: Schlüssel
- 7: Dokument
- 8: E-Mailanhang
- 9: E-Mail Nachricht
- 10: Adressverzeichnis
- 11: Mobiltelefon
- 12: PDA

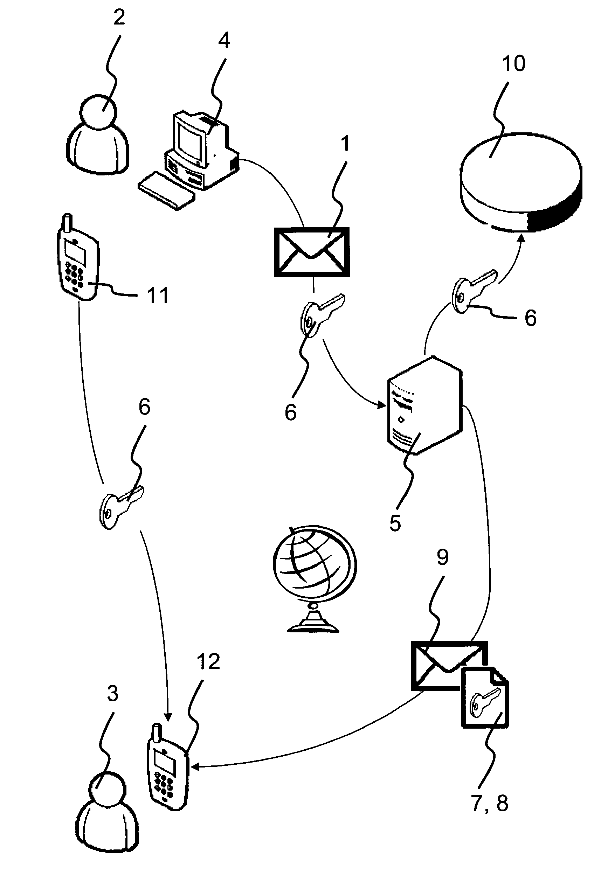

## Patentansprüche

1. Verfahren zum gesicherten Austausch einer E-Mail Nachricht (1), wobei die E-Mail Nachricht (1) zunächst kodiert und anschließend zu einem Empfänger (3) übertragen wird, ***dadurch gekennzeichnet, dass*** die E-Mail Nachricht (1) in ein kodiertes Dokument (7) umgewandelt und das Dokument (7) als E-Mailanhang (8) zu dem Empfänger (3) übertragen wird.

2. Verfahren nach dem vorgenannten Anspruch, ***dadurch gekennzeichnet, dass*** die E-Mail Nachricht (1) in ein Dokument (7) im PDF-Format oder im Microsoft Office Format umgewandelt wird.

3. Verfahren nach einem der vorgenannten Ansprüche, ***dadurch gekennzeichnet, dass*** zum Beantworten der E-Mail Nachricht (1) ein ausführbarer Programmcode in das Dokument (7) integriert wird.

4. Verfahren nach einem der vorgenannten Ansprüche, ***dadurch gekennzeichnet, dass*** eine Meta-Information in das Dokument (7) integriert wird.

5. Verfahren nach dem vorgenannten Anspruch, ***dadurch gekennzeichnet, dass*** eine Identifikationsnummer in das Dokument (7) integriert wird.

6. Verfahren nach einem der vorgenannten Ansprüche, ***dadurch gekennzeichnet, dass*** das Dokument (7) mit einem Passwort kodiert wird.

7. Verfahren nach dem vorgenannten Anspruch, ***dadurch gekennzeichnet, dass*** zum Beantworten der E-Mail Nachricht (1) das Passwort in das Dokument (7) integriert wird.

8. Verfahren nach einem der vorgenannten Ansprüche, ***dadurch gekennzeichnet, dass*** zum Beantworten der E-Mail Nachricht (1) ein Zertifikat mit dem Dokument (7) übermittelt wird.

9. Verfahren nach einem der vorgenannten Ansprüche, ***dadurch gekennzeichnet, dass*** ein Verweis auf eine zum Beantworten der E-Mail Nachricht (1) eingerichtete Webseite mit dem Dokument (7) übermittelt wird.

10. System (5) zum gesicherten Austauschen einer E-Mail Nachricht (1), wobei die E-Mail Nachricht (1) zunächst mittels einer Kodierungskomponente des Systems (5) kodierbar und anschließend mittels des Systems (5) versendbar ist, ***dadurch gekennzeichnet, dass*** die E-Mail Nachricht (1) mittels der Kodierungskomponente in ein kodiertes Dokument (7) umwandelbar und dieses mittels des Systems (5) als E-Mailanhang (8) versendbar ist.

11. System (5) nach dem vorgenannten Anspruch, ***gekennzeichnet durch*** ein Adressverzeichnis (10), mittels dessen die Kodierungskomponente versender- und/oder empfängerspezifisch konfigurierbar ist.

12. System (5) nach einem der Ansprüche 10 oder 11, ***gekennzeichnet durch*** eine Webseite, mittels derer eine von dem System (5) an einen Empfänger (3) versendete E-Mail Nachricht (1) **durch** den Empfänger (3) beantwortbar ist.
